# EUROPÄISCHE PATENTANMELDUNG

(11) **EP 2 085 156 A1**
(43) Veröffentlichungstag der Anmeldung: **05.08.2009**
(21) Anmeldenummer: 09405008.5
(22) Anmeldetag: 14.01.2009
(51) Int. Cl.: B09B 3/00, C04B 2/10, F23G 5/00, C04B 7/44

(54) **Verfahren und Vorrichtung zur Herstellung Thermisch behandelter Produkte**

(30) Priorität: 30.01.2008 CH 1292008
(71) Anmelder: Hochschule Rapperswil, 8640 Rapperswil (CH)
(72) Erfinder: Bunge, Rainer, Prof. Dr., 8640 Rapperswil (CH)

(57) **Zusammenfassung**

Der Erfindung liegt die Aufgabe zugrunde, ein Verfahren und eine Vorrichtung zu schaffen, die es erlauben, thermisch behandelte Produkte zusammen mit festen schwermetallhaltigen Abfällen in Abfallverbrennungsanlagen so herzustellen, dass keine signifikanten Schwermetallkontamination vom Abfall in das gebrannte Produkt gelangen.
Das zu brennende Rohmaterial wird so vorbereitet, dass dieses wenigstens eine physikalische Eigenschaft aufweist, die als Trennmerkmal für eine Abtrennung des gebrannten Produktes aus der Verbrennungsasche des Abfalls ausgenutzt werden kann.

## Beschreibung

Die Erfindung fällt in das Gebiet der thermischen Verfahrenstechnik. Vor allem, jedoch nicht ausschliesslich, geht es um die Herstellung gebrannter Baustoffe unter Verwendung schwermetallhaltiger fester Brennstoffe. Die Erfindung betrifft ein Verfahren und eine Vorrichtung nach den Oberbegriffen der entsprechenden, unabhängigen Patentansprüche.

Stand der Technik zur Herstellung gebrannter Materialien ist das Einbringen des zu brennenden Rohmaterials in einen Ofen in welchem dieses gebrannt wird. Gebrannt werden zum Beispiel Gips (zu Anhydrid), Kalkstein (zu Branntkalk), Ton (zu Backstein). Die Brennöfen werden in der Regel mit einem fossilen Brennstoff beheizt, z.B. Holz, Kohle oder Öl.

Mit den steigenden Preisen für fossile Brennstoffe werden billigere Ersatzbrennstoffe gesucht. Neuerdings werden daher vermehrt auch hochkalorische Abfälle eingesetzt, z.B. Altöl und Autoreifen in Zementöfen. Problematisch wird dies, wenn die Brennstoffe Schadstoffe enthalten, die mit der Asche des Brennstoffs in das gebrannte Produkt übertragen werden. Dies betrifft vor allem Brennstoffe, welche Schwermetalle enthalten.

Eine Quelle hochkalorischer Ersatzbrennstoffe sind Siedlungsabfälle, welche allerdings Schwermetalle enthalten. Um eine Kontamination des Brenngutes durch Schwermetalle zu vermeiden, gibt es die Möglichkeit die Siedlungsabfälle so aufzubereiten, dass relativ gering schwermetallbelastete Ersatzbrennstoffe aus dem Siedlungsabfall gewonnen werden. Die hierfür notwendigen Aufbereitungsverfahren sind jedoch aufwändig. Ausserdem bleibt so der Heizwert der schwermetallhaltigen Siedlungsabfallkomponenten ungenutzt. Wesentlich attraktiver wäre es, das zu brennende Rohmaterial direkt mit den unaufbereiteten Siedlungsabfällen zu brennen. Das liesse sich grundsätzlich durch eine indirekte Beheizung bewerkstelligen, bei welcher der schwermetallhaltige Brennstoff (bzw. dessen Asche) nicht in Kontakt mit dem zu brennenden Rohmaterial kommt. Dies erfordert allerdings spezielle Öfen: konventionelle Abfallverbrennungsanlagen sind hierfür ungeeignet.

Der Erfindung liegt die Aufgabe zugrunde, ein Verfahren und eine Vorrichtung zu schaffen, die es erlauben, thermisch zu behandelndes Rohmaterial zusammen mit festen schwermetallhaltigen Abfällen in Abfallverbrennungsanlagen so zu brennen, dass keine signifikanten Schwermetallkontaminationen vom Abfall in das gebrannte Produkt gelangen.

Diese Aufgabe wird gelöst durch das Verfahren und die Vorrichtung, wie sie in den Patentansprüchen definiert sind.

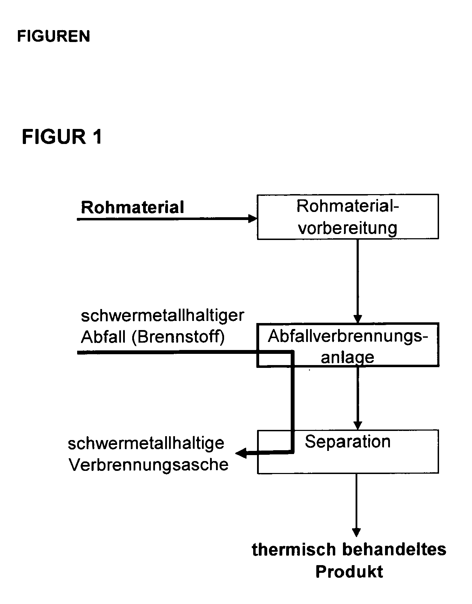

Das erfindungsgemässe Verfahren besteht in folgenden Schritten (Fig. 1):
1. Das zu brennende Rohmaterial wird so vorbereitet, dass dieses wenigstens eine physikalische Eigenschaft aufweist, die als Trennmerkmal für eine Abtrennung des gebrannten Produktes aus der Asche des Abfalls ausgenutzt werden kann.
2. Das so vorbereitete Rohmaterial wird gemeinsam mit dem schwermetallhaltigen Abfall in einer Abfallverbrennungsanlage verbrannt und gemeinsam mit der Asche der Abfälle aus der Abfallverbrennungsanlage ausgetragen.
3. Das gebrannte Produkt wird durch eine Aufbereitung von der schwermetallreichen Rostasche abgetrennt.

Die erfindungsgemässe Vorrichtung weist folgende Elemente auf.
1. Eine Anlage zur Vorbereitung des zu brennenden Rohmaterials wobei diesem eine physikalische Eigenschaft verliehen wird, in der es sich von der Asche des festen Brennstoffs unterscheidet, welche Eigenschaft als Trennmerkmal für eine Separation von der Asche verwertbar ist.
2. Eine Verbrennungsanlage für feste Abfälle.
3. Eine Aufbereitungsanlage in der das gebrannte Produkt anhand des unter Punkt 1 induzierten Merkmals von der schwermetallreichen Asche der Abfälle abgetrennt wird.

Während sich die meisten Anwendungen des erfindungsgemässen Verfahrens auf Brennprozesse im Sinne einer chemischen Stoffumwandlung beziehen, liegen alle Verfahren im Schutzbereich dieser Schrift bei welchen ein Rohmaterial durch Temperatureinfluss so behandelt wird, dass seine chemischen oder physikalischen Eigenschaften verändert werden. Eingeschlossen in den Begriff "Brennverfahren" sind im Sinne dieser Schrift daher auch die thermische Trocknung sowie Schmelz- und Sinterverfahren.

Die physikalische Eigenschaft, die dem zu brennenden Rohmaterial vor der Einschleusung in die Müllverbrennungsanlage verliehen wird, sodass das gebrannte Produkt aus der Asche abtrennbar wird, kann eine der folgenden Eigenschaften sein:
- Definiertes enges Korngrössenspektrum (Abtrennung durch Aussiebung)
- Spezielle Geometrie, z.B. Kugelform (Abtrennung aufgrund des Rollverhaltens)
- Farbliche Markierung (Abtrennung mit optischen Sortierverfahren)
- Zusatz eines magnetisierbaren Stoffes, z.B. Eisenspäne (Abtrennung durch Magnetscheidung)
- Zusatz von Treibmitteln, z.B. Glasmehl mit Schaumbildner (Abtrennung durch Dichtesortierung)

Die zur Ausübung der Erfindung eingesetzten Abfallverbrennungsanlagen sind insbesondere solche, die über eine Rostfeuerung, einen Drehrohrofen oder über eine Wirbelschichtfeuerung verfügen.

Als schwermetallhaltige Brennstoffe kommen insbesondere Folgende in Frage:
- Siedlungsabfälle
- Altreifen
- Industrielle Abfälle
- Bauabfälle
- Shredderleichtfraktionen
- Klärschlamm
- Chemisch belastetes Altholz

Als "schwermetallhaltige Abfälle" definieren wir im Sinne dieser Schrift solche festen Brennstoffe, deren Verbrennungsasche mehr als 250 mg/kg von wenigstens einem der folgenden Elemente enthält:
- Zink
- Blei
- Kupfer
- Nickel
- Kobalt
- Chrom

Als zu brennendes Rohmaterial kommen insbesondere folgende Materialien in Frage:
- Kalkstein
- Magnesit
- Dolomit
- Gips
- Ton
- Glasmehl (gegebenenfalls zusammen mit Treibmittel zur Schaumglasherstellung)
- Klärschlamm
- Chemisch kontaminiertes Erdreich (insbesondere solches das mit organischen Schadstoffen belastet ist)
- Hydroxidschlamm aus der Abwasserreinigung

Das Verfahren wird im Folgenden anhand einer bevorzugten Ausführungsform zur Herstellung von Schaumglas erläutert. Das Rohmaterial besteht aus Glasmehl mit einer Korngrösse <100 µm, welches mit einem Blähmittel versetzt ist. Dieses Glasmehl wird in der Rohmaterialvorbereitung zu Pellets mit einem Durchmesser von ca. 40 mm Durchmesser verarbeitet. Die Pellets werden zusammen mit Siedlungsabfällen in eine Müllverbrennungsanlage eingeschleust und in deren Rostofen Temperaturen von ca. 900°C ausgesetzt. Hierbei schmilzt das Glas und das Blähmittel treibt die Pellets zu Schaumglaskugeln von ca. 70mm Durchmesser auf. Die gebrannten Pellets werden zusammen mit der Rostasche über einen Trockenaustrag aus dem Ofen ausgeschleust und in die Separationsanlage gegeben. Hier wird auf einem Doppeldecksieb die Fraktion 50-80mm ausgesiebt, in der die Pellets stark angereichert vorliegen. Um eine vollständige Abtrennung von den anderen Aschekomponenten zu erzielen, wird die Siebfraktion 50-80mm anschliessend noch auf einem Schrägbandseparator nach dem Rollverhalten aufbereitet. Die kugelförmigen Pellets aus Schaumglas (thermisch behandeltes Produkt) Produkt) rollen hierbei vom Band, während die schwermetallhaltigen Aschebestandteile auf diesem liegen bleiben. Das so gewonnene thermisch behandelte Produkt (Schaumglas) ist weitgehend frei von Schwermetallen und kann als Baustoff eingesetzt werden.

## Patentansprüche

1. Verfahren zur Herstellung von thermisch behandelten Produkten mittels Verbrennung von schwermetallhaltigen festen Abfällen **dadurch gekennzeichnet dass**
• das Rohmaterial für das thermisch zu behandelnde Produkt so vorbereitet wird, dass das thermisch behandelte Produkt wenigstens eine physikalische Eigenschaft aufweist, die als Trennmerkmal für eine Abtrennung des thermisch behandelten Produktes aus der Verbrennungsasche ausgenutzt werden kann,
• und das so vorbereitete Rohmaterial gemeinsam mit dem schwermetallhaltigen Abfall in einer Abfallverbrennungsanlage verbrannt wird, wobei es in direkten Kontakt mit der schwermetallhaltigen Verbrennungsasche kommt,
• und das thermisch behandelte Produkt zusammen mit der Verbrennungsasche aus der Abfallverbrennungsanlage ausgetragen wird,
• und das thermisch behandelte Produkt durch eine Aufbereitung von der schwermetallreichen Verbrennungsasche abgetrennt wird.

2. Verfahren nach Anspruch 1 **dadurch gekennzeichnet, dass** die festen schwermetallhaltigen Abfälle eine Verbrennungsasche erzeugen, die wenigstens 250mg/kg eines der folgenden Schadstoffe enthält: Zn, Pb, Cd, Cu, Hg, Ni, Co, Cr.

3. Verfahren nach einem der Ansprüche 1 oder 2 **dadurch gekennzeichnet, dass** das Rohmaterial für das thermisch zu behandelnde Produkt im Wesentlichen aus einem der folgenden Materialien besteht: Kalkstein, Magnesit, Dolomit, Gips, Glas, Ton, Klärschlamm, Hydroxidschlamm aus der Abwasserreinigung, chemisch kontaminiertes Erdreich, insbesondere solches das mit organischen Schadstoffen belastet ist.

4. Verfahren nach einem der Ansprüche 1 bis 3 **dadurch gekennzeichnet, dass** das Rohmaterial pelletiert wird, oder mit Eisen versetzt wird, oder mit Treibmitteln versetzt wird oder farblich markiert wird, insbesondere mit UV-aktiven Substanzen.

5. Vorrichtung zur Erzeugung von thermisch behandelten Produkten mittels Verbrennung von festen schwermetallhaltigen Abfällen bestehend aus
• einer Anlage zur Vorbereitung des thermisch zu behandelnden Rohmaterials wobei diesem eine physikalische Eigenschaft verliehen wird, in der es sich von der Verbrennungsasche der festen Abfälle unterscheidet,
• und eine Verbrennungsanlage für feste Abfälle, aus der das thermisch behandelte Produkt zusammen mit der schwermetallreichen Verbrennungsasche kontinuierlich oder quasi-kontinuierlich ausgetragen wird
• und eine Aufbereitungsanlage in der das thermisch behandelte Produkt anhand des in der Materialvorbereitung induzierten Merkmals von der schwermetallreichen Verbrennungsasche abgetrennt wird.

6. Vorrichtung nach Anspruch 5 **dadurch gekennzeichnet, dass** die Anlage zur Vorbehandlung des Rohmaterials eine Pelletieranlage ist.

7. Vorrichtung nach einem der Ansprüche 5 oder 6 **dadurch gekennzeichnet, dass** die Verbrennungsanlage für feste Abfälle eine Rostfeuerung, oder eine Wirbelschichtfeuerung oder ein Drehrohrofen ist.

8. Vorrichtung nach einem der Ansprüche 5 bis 7 **dadurch gekennzeichnet, dass** die Verbrennungsanlage für feste Abfälle über einen trockenen Aschenaustrag verfügt.

9. Vorrichtung nach einem der Ansprüche 5 bis 8 **dadurch gekennzeichnet, dass** die Aufbereitungsanlage zur Abtrennung des thermisch behandelten Produkts von der Asche aus der Abfallverbrennung über wenigstens eine der folgenden Komponenten verfügt: Klassierer, Magnetscheider, Dichtesortierer, optischer Sortierer.
